# NEUE EUROPÄISCHE PATENTSCHRIFT

(11) **EP 3 312 010 B2**
(45) Veröffentlichungstag und Bekanntmachung des Hinweises auf die Entscheidung über den Einspruch: **26.03.2025**
(45) Hinweis auf die Patenterteilung: 04.08.2021
(21) Anmeldenummer: 17176129.9
(22) Anmeldetag: 14.06.2017
(51) Int. Cl.: B33Y 30/00, B29C 64/268, B22F 10/28, B22F 10/36, B22F 12/44

(54) **VORRICHTUNG ZUR ADDITIVEN HERSTELLUNG DREIDIMENSIONALER OBJEKTE**
APPARATUS FOR ADDITIVELY MANUFACTURING OF THREE-DIMENSIONAL OBJECTS
DISPOSITIF DE FABRICATION ADDITIVE D'OBJETS TRIDIMENSIONNELS

(30) Priorität: 24.10.2016 DE 102016120244
(43) Veröffentlichungstag der Anmeldung: 25.04.2018
(73) Patentinhaber: Concept Laser GmbH, 96215 Lichtenfels (DE)
(72) Erfinder: HERZOG, Frank, 96215 Lichtenfels (DE); Dr. BECHMANN, Florian, 96215 Lichtenfels (DE); Prof. STARK, Markus, 96135 Waizenburg (DE)
(74) Vertreter: Hafner & Kohl PartmbB

(56) Entgegenhaltungen:
- WO-A1-2016/146185
- US-A1- 2015 309 473
- US-A1- 2016 243 649
- US-A1- 2016 288 254

## Beschreibung

Die Erfindung betrifft eine Vorrichtung zur additiven Herstellung dreidimensionaler Objekte durch sukzessives schichtweises selektives Belichten und damit einhergehendes Verfestigen von Baumaterialschichten aus einem vermittels eines von einer Laserstrahlerzeugungseinrichtung erzeugten Laserstrahls verfestigbaren Baumaterial.

Entsprechende Vorrichtungen sind zur additiven Herstellung dreidimensionaler Objekte an und für sich bekannt. Typische Ausführungsformen entsprechender Vorrichtungen sind Vorrichtungen zur Durchführung selektiver Lasersinter- bzw. selektiver Laserschmelzverfahren. Eine wesentliche Funktionskomponente entsprechender Vorrichtungen stellt eine Laserstrahlerzeugungseinrichtung dar, welche zur Erzeugung des der selektiven Belichtung jeweiliger Baumaterialschichten dienenden Laserstrahls eingerichtet ist. Der Laserstrahl weist durch einen oder mehrere Laserstrahlparameter definierte Strahleigenschaften bzw. ein durch ein oder mehrere Laserstrahlparameter definiertes Strahlprofil auf.

Die Laserstrahlerzeugungseinrichtungen bekannter Vorrichtungen erzeugen typischerweise Laserstrahlen mit einem gaußförmigen Intensitäts- bzw. Strahlprofil. Eine unter Umständen erforderliche Veränderung der Intensität des Laserstrahls ist hierbei nur durch eine Defokussierung bzw. eine Verschiebung der Fokuslage des Laserstrahls möglich; das Strahlprofil des Laserstrahls wird hierdurch jedoch nicht verändert. Gattungsgemäße Laserstrahlerzeugungseinrichtungen sind aus US 2016/243649A1 und US 2015/309473A1 bekannt.

Insbesondere im Hinblick auf eine größtmögliche Variabilität der mit einer entsprechenden Vorrichtung realisierbaren Belichtungsstrategien besteht jedoch ein Bedarf nach der Möglichkeit einer gezielten Veränderung der Strahleigenschaften, insbesondere des Strahlprofils, des von einer Laserstrahlerzeugungseinrichtung erzeugten Laserstrahls.

Der Erfindung liegt die Aufgabe zugrunde, eine, insbesondere im Hinblick auf die Möglichkeit einer gezielten Veränderung der Strahleigenschaften, insbesondere des Strahlprofils, des von einer Laserstrahlerzeugungseinrichtung erzeugten Laserstrahls, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes Verfestigen von Baumaterialschichten aus einem vermittels eines Laserstrahls verfestigbaren Baumaterial eingerichtet. Bei dem Baumaterial kann es sich insbesondere um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten, d. h. insbesondere eine Laserstrahlerzeugungseinrichtung, welche zur Erzeugung eines Laserstrahls zur sukzessiven schichtweisen selektiven Verfestigung einzelner Baumaterialschichten eingerichtet ist, und eine Beschichtereinrichtung, welche zur Ausbildung selektiv zu verfestigender Baumaterialschichten in einer Bauebene eingerichtet ist. Bei einer Bauebene kann es sich um eine Oberfläche eines, typischerweise (in vertikaler Richtung) bewegbar gelagerten, Trägerelements einer Trägereinrichtung oder um eine Baumaterialschicht handeln. Im Allgemeinen ist in einer Bauebene wenigstens eine selektiv zu verfestigende bzw. selektiv verfestigte Baumaterialschicht ausgebildet. Vermittels der Vorrichtung durchgeführte additive Bauvorgänge erfolgen in einer der Vorrichtung zugehörigen, typischerweise inertisierbaren, Prozesskammer. Die Prozesskammer kann einen Teil einer Gehäusestruktur der Vorrichtung bilden.

Die Laserstrahlerzeugungseinrichtung ist zur Erzeugung eines Laserstrahls mit durch wenigstens einen Laserstrahlparameter, d. h. insbesondere Amplitude, Phase, Polarisation, definierten Strahleigenschaften, d. h. insbesondere einem durch wenigstens einen Laserstrahlparameter definierten Strahlprofil, eingerichtet. Der von der Laserstrahlerzeugungseinrichtung erzeugte Laserstrahl kann beispielsweise ein gaußförmiges Strahlprofil aufweisen.

Die Vorrichtung umfasst weiterhin eine Modulationseinrichtung. Die Modulationseinrichtung ist zur gezielten Veränderung bzw. Modulation wenigstens eines die Strahleigenschaften beeinflussenden Laserstrahlparameters des von der Laserstrahlerzeugungseinrichtung ausgehenden bzw. erzeugten Laserstrahls eingerichtet. Im Besonderen ist die Modulationseinrichtung zur gezielten Veränderung wenigstens eines das Strahlprofil beeinflussenden Laserstrahlparameters des von der Laserstrahlerzeugungseinrichtung erzeugten Laserstrahls, d. h. zur gezielten Veränderung des Strahlprofils des von der Laserstrahlerzeugungseinrichtung erzeugten Laserstrahls eingerichtet. Vermittels der Modulationseinrichtung lassen sich also durch gezielte Veränderung entsprechender Laserstrahlparameter Laserstrahlen mit (nahezu) beliebigen, d. h. insbesondere auch örtlich und/oder zeitlich veränderlichen, Strahleigenschaften, insbesondere beliebigen Strahlprofilen, lediglich beispielhaft sei auf Gauß- oder Top-Hat-Profile verwiesen, generieren. Insbesondere lässt sich vermittels der Modulationseinrichtung die Wellenfront des von der Laserstrahlerzeugungseinrichtung erzeugten Laserstrahls gezielt verändern. Da die Wellenfront das Strahlprofil maßgeblich bestimmt, geht eine Veränderung der Wellenfront typischerweise mit einer Veränderung des Strahlprofils des Laserstrahls einher. Unter einer Veränderung der Wellenfront bzw. des Strahlprofils kann auch eine Aufteilung einer (einzigen) Wellenfront bzw. eines (einzigen) Strahlprofils des von der Laserstrahlerzeugungseinrichtung erzeugten Laserstrahls in mehrere diskrete Strahlprofile bzw. Wellenfronten zu verstehen sein. Mithin kann ein Laserstrahl mit einem (einzigen) Fokusbereich vermittels der Modulationseinrichtung in mehrere Laserstrahlen mit jeweils einem Fokusbereich erzeugt werden.

Die gezielte Veränderung bzw. Modulation des wenigstens einen die Strahleigenschaften beeinflussenden Laserstrahlparameters erfolgt auf Grundlage einer, insbesondere anwender- bzw. benutzerseitig, z. B. durch eine Programmierung, vorgebbaren bzw. vorgegebenen Zielgröße. Die Zielgröße kann im Allgemeinen wenigstens einen die Strahleigenschaften betreffenden Laserstrahlparameter (Soll-Laserstrahlparameter) betreffen. Im Besonderen kann die Zielgröße ein Strahlprofil (Soll-Strahlprofil) des Laserstrahls betreffen.

Zur Vorgabe entsprechender Zielgrößen umfasst die Vorrichtung eine geeignete Eingabeeinrichtung, z. B. als Bestandteil einer vorrichtungsseitigen Benutzerschnittstelle, über welche ein Benutzer (benutzerseitige) Eingaben, d. h. insbesondere Bild-, Text- oder Spracheingaben, zur Vorgabe einer entsprechenden Zielgröße - im Allgemeinen zur Vorgabe eines gewünschte Strahleigenschaften, d. h. insbesondere ein gewünschtes Strahlprofil, aufweisenden Laserstrahls - tätigen kann. Eine entsprechende Eingabeeinrichtung kann z. B. als Touch-Screen-Einrichtung ausgebildet sein oder eine solche umfassen. Selbstverständlich ist es auch möglich, entsprechende Eingaben an einer externen, gleichwohl mit der Vorrichtung datenmäßig kommunizierenden Eingabeeinrichtung, z. B. als Bestandteil eines Computers, zu tätigen.

Aus vorstehenden Ausführungen ergibt sich, dass die Modulationseinrichtung der Laserstrahlerzeugungseinrichtung zugeordnet ist. Die Zuordnung der Modulationseinrichtung zu der Laserstrahlerzeugungseinrichtung ist insbesondere derart gestaltet, dass der von der Laserstrahlerzeugungseinrichtung ausgehende bzw. erzeugte Laserstrahl auf die Modulationseinrichtung trifft. Die Modulationseinrichtung ist sonach in den Strahlengang des von der Laserstrahlerzeugungseinrichtung ausgehenden Laserstrahls schaltbar bzw. geschaltet. Die Laserstrahlerzeugungseinrichtung und die dieser zugeordnete Modulationseinrichtung können, neben einer etwaig vorhandenen Strahlablenkeinrichtung (Scannereinrichtung), die wesentlichen Bestandteile einer vorrichtungsseitigen Belichtungseinrichtung bilden.

Durch die Implementierung einer entsprechenden Modulationseinrichtung ist eine, insbesondere im Hinblick auf die Möglichkeit einer gezielten Veränderung der Strahleigenschaften, insbesondere des Strahlprofils, des von einer Laserstrahlerzeugungseinrichtung erzeugten Laserstrahls, verbesserte Vorrichtung zur additiven Herstellung dreidimensionaler Objekte gegeben.

Durch die Implementierung einer entsprechenden Modulationseinrichtung ergeben sich jedoch weitere Vorteile für die Vorrichtung bzw. die damit durchgeführten additiven Bauvorgänge:
Beispielsweise lässt sich durch eine vermittels der Modulationseinrichtung realisierbare gezielte Veränderung der Strahleigenschaften des Laserstrahls eine Erhöhung der Qualität der additiv herzustellenden bzw. hergestellten Objekte realisieren. Die Erhöhung der Qualität der additiv herzustellenden bzw. hergestellten Objekte begründet sich insbesondere damit, dass sich durch die gezielte Veränderung der Strahleigenschaften eine örtlich und/oder zeitlich aufgelöste Temperierung bzw. Temperatursteuerung selektiv zu verfestigender bzw. verfestigter Baumaterialschichten realisieren lässt. Dies ist insbesondere für die Verarbeitung schwer verarbeitbarer Baumaterialien, d. h. insbesondere Baumaterialien, welche sich nur in einem vergleichsweise engen Prozessfenster verarbeiten lassen, von Vorteil. Durch eine gezielte Veränderung der Strahleigenschaften lässt sich eine gezielte thermische Beeinflussung des Baumaterials um einen eigentlich zu verfestigenden Verfestigungsbereich, insbesondere Schmelzbereich bzw. -pool, in einer Baumaterialschicht realisieren. So kann ein die Verarbeitbarkeit des Baumaterials begünstigender Temperierungs- bzw. Wärmebehandlungseffekt erzielt werden. Auch die Einstellung unterschiedlicher Strahlprofile kann einen positiven Einfluss auf die Qualität der additiv herzustellenden bzw. hergestellten Objekte haben.

Durch eine vermittels der Modulationseinrichtung realisierbare gezielte Veränderung der Strahleigenschaften lässt sich weiterhin eine Reduzierung der Bauzeiten und somit eine Steigerung der Effizienz der vermittels der Vorrichtung durchführbaren additiven Bauvorgänge realisieren. Die Reduzierung der Bauzeiten bzw. die Steigerung der Effizienz begründet sich insbesondere damit, dass sich je nach Bedarf unterschiedliche, d. h. z. B. groß- oder kleinflächige, Strahlprofile realisieren lassen. Beispielsweise lassen sich durch eine Aufteilung eines, z. B. flächigen, Strahlprofils bzw. einer, z. B. flächigen, Wellenfront mehrere, z. B. streifenförmige, Strahlprofile bzw. mehrere, z. B. streifenförmige, Wellenfronten realisieren. Unabhängig von einer entsprechenden Aufteilung eines Strahlprofils in mehrere Strahlprofile kann auch die Einstellung unterschiedlicher Strahlprofile einen positiven Einfluss auf die Reduzierung der Bauzeiten der vermittels der Vorrichtung durchführbaren additiven Bauvorgänge haben.

Durch eine vermittels der Modulationseinrichtung realisierbare gezielte Veränderung der Strahleigenschaften kann die Modulationseinrichtung ferner weitere (optische) Funktionen übernehmen, sodass der konstruktive Aufbau der Vorrichtung gegebenenfalls vereinfacht werden kann. Die Modulationseinrichtung kann beispielsweise zur Ablenkung bzw. Positionierung des Laserstrahls auf einer Baumaterialschicht dienen, sodass gegebenenfalls auf eine Strahlablenkeinrichtung verzichtet werden kann. Auch kann die Modulationseinrichtung zur Veränderung der Fokusebene dienen, sodass gegebenenfalls (auch) auf eine Einrichtung zur Einstellung der Fokusebene bzw. einer entsprechenden Einrichtung typischerweise zugehörige optische Elemente, insbesondere Linsen, verzichtet werden kann. Schließlich kann die Modulationseinrichtung (auch) zur Kollimation des Laserstrahls dienen, sodass gegebenenfalls (auch) auf eine Kollimationseinrichtung zur Kollimation des Laserstrahls verzichtet werden kann.

Die Modulationseinrichtung kann mehrere, in den Strahlengang des von der Laserstrahlerzeugungseinrichtung ausgehenden bzw. erzeugten Laserstrahls schaltbare oder geschaltete optische Modulationselemente ("Modulationselemente") umfassen, welche zur Beeinflussung wenigstens eines die Strahleigenschaften beeinflussenden Laserstrahlparameters wenigstens eines Strahlanteils des von der Laserstrahlerzeugungseinrichtung erzeugten Laserstrahls eingerichtet sind. Je nach Anzahl und Anordnung jeweiliger Modulationselemente kann es sein, dass auf einzelne, mehrere oder sämtliche Modulationselemente ein bestimmter Strahlanteil des von der Laserstrahlerzeugungseinrichtung ausgehenden Laserstrahls trifft. Der auf ein jeweiliges Modulationselement treffende Strahlanteil kann vermittels des Modulationselements in seinen Strahleigenschaften, d. h. z. B. Amplitude, Phase und Polarisation, verändert werden, sodass sich insgesamt ein in seinen Strahleigenschaften, wie erwähnt, z. B. seinem Strahlprofil, veränderter Laserstrahl ergibt.

Die Modulationselemente sind typischerweise in einer in den Strahlengang des Laserstrahls schaltbaren oder geschalteten Gehäusestruktur der Modulationseinrichtung angeordnet oder ausgebildet, in welcher diese typischerweise in einer definierten räumlichen Anordnung und/oder Ausrichtung (relativ zueinander) vorliegen. Die Modulationselemente können dabei, insbesondere pixelartig, in wenigstens einer Reihe und/oder Spalte angeordnet oder ausgebildet sein. Mithin können mehrere Modulationselemente in reihen- und/oder spaltenartig benachbarter Anordnung vorliegen.

Die Modulationselemente können einzeln oder gruppenweise in einen eine Beeinflussung des wenigstens einen die Strahleigenschaften beeinflussenden Laserstrahlparameters des Laserstrahls ermöglichenden Zustand (aktiver Zustand) schaltbar sein. Insbesondere kann jedes Modulationselement in einen ersten Zustand, in welchem das jeweilige Modulationselement eine wenigstens teilweise Transmission oder Reflexion des Laserstrahls bzw. eines Laserstrahlanteils ermöglicht, und in einen zweiten Zustand, in welchem das jeweilige Modulationselement eine wenigstens teilweise Transmission oder Reflexion des Laserstrahls bzw. eines Laserstrahlanteils nicht ermöglicht, geschaltet werden. Die der Schaltung der Modulationselemente zugrunde liegende Steuerung kann durch eine der Modulationseinrichtung zugehörige Steuereinrichtung erfolgen. Die Steuereinrichtung kommuniziert typischerweise (unmittelbar oder mittelbar) mit der bereits erwähnten vorrichtungsseitigen Eingabeeinrichtung, über welche sich entsprechende (benutzerseitig) vorgebbare bzw. vorgegebene Zielgrößen eingeben lassen.

Bei den Modulationselementen kann es sich konkret um Flüssigkristallelemente handeln bzw. können diese entsprechende Flüssigkristallelemente umfassen. Die Modulationseinrichtung kann sonach als räumlicher Lichtmodulator, engl.: "spatial light modulator", kurz SLM, ausgebildet sein, welcher vermittels einer geeigneten Anordnung, Ausrichtung und Schaltung entsprechender Flüssigkristallelemente zur separaten oder kumulativen Beeinflussung einzelner oder mehrerer Laserstrahlparameter, d. h. insbesondere der Amplitude, der Phase oder der Polarisation, des Laserstrahls eingerichtet ist.

Aus vorstehendem Absatz ergibt sich, dass der über die Modulationseinrichtung gezielt veränderbare, die Strahleigenschaften, insbesondere das Strahlprofil, beeinflussende Laserstrahlparameter insbesondere die Amplitude, die Phase oder die Polarisation des Laserstrahls bzw. der Wellenfront des Laserstrahls sein kann. Die Modulationseinrichtung kann also insbesondere eingerichtet sein, die Amplitude, die Phase oder die Polarisation des Laserstrahls bzw. der Wellenfront des Laserstrahls gezielt zu verändern.

Wie erwähnt, ist die Modulationseinrichtung typischerweise in den Strahlengang des von der Laserstrahlerzeugungseinrichtung ausgehenden bzw. erzeugten Laserstrahls schaltbar bzw. geschaltet. Die Modulationseinrichtung ist der Laserstrahlerzeugungseinrichtung sonach typischerweise (optisch) nachgeschaltet.

Hiervon ausgehend ist die Modulationseinrichtung zwischen einer, wenigstens eine Kollimatorlinse umfassenden, Kollimatoreinrichtung und einer optischen Spiegeleinrichtung angeordnet oder ausgebildet. Dabei kann die Modulationseinrichtung unmittelbar benachbart einerseits zu der Kollimatoreinrichtung und andererseits zu der Spiegeleinrichtung angeordnet oder ausgebildet sein. Gemäß einer beispielhaften Anordnung kann der Modulationseinrichtung eine optische Spiegeleinrichtung, eine, insbesondere eine optische Linse umfassende, erste Linseneinrichtung, eine, insbesondere einen optischen Raumfilter umfassende, Raumfiltereinrichtung eine, insbesondere eine weitere optische Linse umfassende, weitere Linseneinrichtung und eine, insbesondere eine Fourierlinse umfassende, Fourierlinseneinrichtung nachgeschaltet sein. Mithin lässt sich durch eine entsprechende Anordnung der vorstehend erwähnten, in der genannten Reihenfolge angeordneten optischen Elemente eine so genannte 4f-Abbildung realisieren. Aus vorstehenden Ausführungen ergibt sich, dass die Modulationseinrichtung im Allgemeinen in unterschiedlichen Anordnungen zwischen unterschiedlichen optischen Elementen der Vorrichtung bzw. einer vorrichtungsseitigen Belichtungseinrichtung angeordnet oder ausgebildet sein kann.

Sofern vorhanden, ist der Modulationseinrichtung eine Strahlablenk- bzw. Scannereinrichtung, welche zur Ablenkung des Laserstrahls auf eine selektiv zu belichtende Baumaterialschicht eingerichtet ist, (optisch) nachgeschaltet. Die Strahlablenkeinrichtung bildet typischerweise das letzte in den Strahlengang geschaltete Bauelement vor Austritt des Laserstrahls aus einer vorrichtungsseitigen Belichtungseinrichtung, deren Bestandteile die Laserstrahlerzeugungseinrichtung und die Modulationseinrichtung, wie erwähnt, typischerweise bilden.

Die Offenbarung betrifft auch eine Modulationseinrichtung für eine wie beschriebene Vorrichtung. Die Modulationseinrichtung ist zur gezielten Veränderung wenigstens eines die Strahleigenschaften, insbesondere das Strahlprofil, beeinflussenden Laserstrahlparameters eines von einer vorrichtungsseitigen Laserstrahlerzeugungseinrichtung erzeugten Laserstrahls auf Grundlage einer, insbesondere benutzerseitig, vorgebbaren oder vorgegebenen Zielgröße eingerichtet. Die vorstehenden Ausführungen im Zusammenhang mit der Vorrichtung gelten in analoger Weise für die Modulationseinrichtung.

Die Erfindung ist anhand von Ausführungsbeispielen in den Zeichnungsfiguren näher erläutert. Dabei zeigen:
- Fig. 1, 2: je eine Prinzipdarstellung einer Vorrichtung gemäß einem Ausführungsbeispiel;
- Fig. 3: eine Prinzipdarstellung der in den Fig. 1, 2 gezeigten Einzelheit III; und
- Fig. 4 - 7: je eine Prinzipdarstellung eines Strahlprofils.

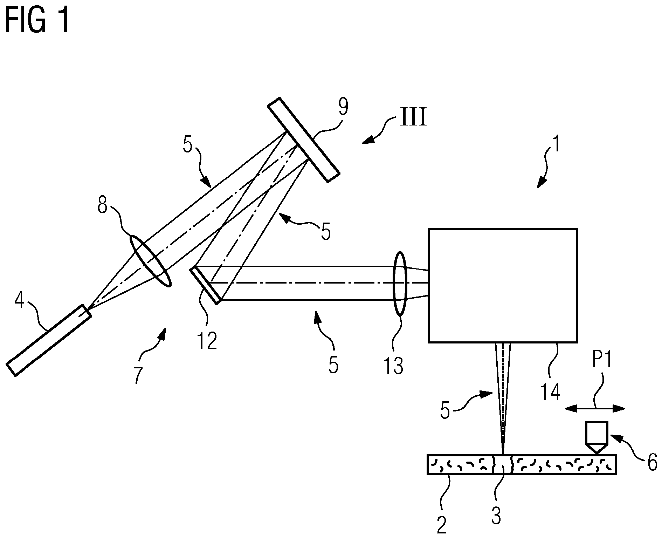

Fig. 1 zeigt eine Prinzipdarstellung einer Vorrichtung 1 gemäß einem Ausführungsbeispiel. Ersichtlich ist in Fig. 1 nur der für die Erläuterung des nachfolgend beschriebenen Prinzips relevante Ausschnitt der Vorrichtung 1 gezeigt.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes Verfestigen von Baumaterialschichten aus einem verfestigbaren Baumaterial 3, d. h. z. B. eines Metallpulvers, vermittels eines Laserstrahls 5. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2. Entsprechende Baudaten können beispielsweise "geslicte" CAD-Daten des herzustellenden Objekts 2 beinhalten.

Die Vorrichtung 1 kann eine inertisierbare Prozesskammer (nicht näher gezeigt) umfassen, in welcher die eigentliche additive Herstellung jeweiliger Objekte 2 erfolgt. In der Prozesskammer kann wenigstens ein Teil der zur Durchführung additiver Bauvorgänge erforderlichen Funktionskomponenten, d. h. insbesondere eine, wie durch den horizontal ausgerichteten Doppelpfeil P1 angedeutet, bewegbar gelagerte Beschichtereinrichtung 6, welche zur Ausbildung zu verfestigender Baumaterialschichten in einer Bauebene eingerichtet ist, angeordnet bzw. ausgebildet sein. Die Prozesskammer kann einen Teil einer Gehäusestruktur (nicht gezeigt) der Vorrichtung 1 bilden.

Zur selektiven Belichtung jeweiliger Baumaterialschichten umfasst die Vorrichtung eine mehrere funktionelle Bestandteile aufweisende Belichtungseinrichtung 7. Aufbau bzw. Funktion der funktionellen Bestandteile der Belichtungseinrichtung 7 werden im Weiteren erläutert:
Ein erster Bestandteil der Belichtungseinrichtung 7 ist eine Laserstrahlerzeugungseinrichtung 4. Die Laserstrahlerzeugungseinrichtung 4 ist zur Erzeugung eines Laserstrahls 5 mit durch wenigstens einen Laserstrahlparameter, d. h. insbesondere Amplitude, Phase, Polarisation, definierten Strahleigenschaften, d. h. insbesondere einem definierten Strahlprofil, eingerichtet. Der von der Laserstrahlerzeugungseinrichtung 4 erzeugte Laserstrahl 5 kann beispielsweise ein gaußförmiges Strahlprofil aufweisen.

Der Laserstrahlerzeugungseinrichtung 4 (optisch) unmittelbar nachgeschaltet angeordnet ist eine Kollimatorlinse (nicht näher bezeichnet) umfassende Kollimatoreinrichtung 8. Die Kollimatoreinrichtung 8 dient zur Kollimation, d. h. zur Parallelisierung, des von der Laserstrahlerzeugungseinrichtung 4 ausgehenden (divergenten) Laserstrahls 5. Die Kollimatoreinrichtung 8 ist damit in den Strahlengang des Laserstrahls 5 geschaltet.

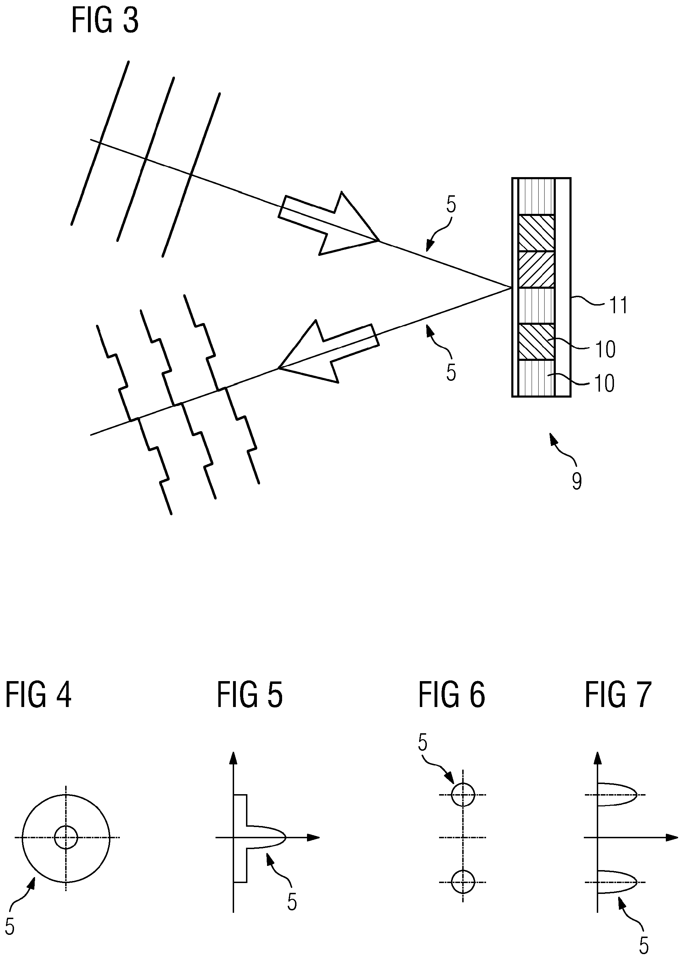

Der Kollimatoreinrichtung 8 (optisch) unmittelbar nachgeschaltet angeordnet ist eine Modulationseinrichtung 9. Die Modulationseinrichtung 9 ist zur gezielten Veränderung bzw. Modulation wenigstens eines die Strahleigenschaften beeinflussenden Laserstrahlparameters des Laserstrahls 5 eingerichtet. Im Besonderen ist die Modulationseinrichtung 9 zur gezielten Veränderung wenigstens eines das Strahlprofil beeinflussenden Laserstrahlparameters des Laserstrahls 5, d. h. zur gezielten Veränderung des Strahlprofils des Laserstrahls 5 eingerichtet. Vermittels der Modulationseinrichtung 9 lassen sich durch gezielte Veränderung entsprechender Laserstrahlparameter Laserstrahlen 5 mit (nahezu) beliebigen, d. h. insbesondere auch örtlich und/oder zeitlich veränderlichen, Strahleigenschaften, insbesondere beliebigen Strahlprofilen, lediglich beispielhaft sei auf Gauß- oder Top-Hat-Profile verwiesen, generieren. Insbesondere lässt sich vermittels der Modulationseinrichtung 9 die Wellenfront und somit das Strahlprofil des Laserstrahls 5 gezielt verändern. Unter einer Veränderung der Wellenfront bzw. des Strahlprofils kann auch eine Aufteilung eines (einzigen) Strahlprofils des Laserstrahls 5 in mehrere diskrete Strahlprofile zu verstehen sein, wie weiter unten im Zusammenhang mit der Beschreibung der in den Fig. 6, 7 gezeigten Querschnitte bzw. Intensitätsprofile erläutert wird.

Die vermittels der Modulationseinrichtung 9 mögliche gezielte Veränderung jeweiliger die Strahleigenschaften des Laserstrahls 5 beeinflussender Laserstrahlparameter erfolgt auf Grundlage einer, insbesondere anwender- bzw. benutzerseitig, z. B. durch eine Programmierung, vorgebbaren bzw. vorgegebenen Zielgröße. Die Zielgröße kann wenigstens einen die Strahleigenschaften betreffenden Laserstrahlparameter (Soll-Laserstrahlparameter) betreffen. Im Besonderen kann die Zielgröße ein Strahlprofil (Soll-Strahlprofil) des Laserstrahls 5 betreffen.

Zur Vorgabe entsprechender Zielgrößen umfasst die Vorrichtung 1 eine geeignete Eingabeeinrichtung (nicht gezeigt), z. B. als Bestandteil einer vorrichtungsseitigen Benutzerschnittstelle (nicht gezeigt), über welche ein Benutzer (benutzerseitige) Eingaben, d. h. insbesondere Bild-, Text- oder Spracheingaben, zur Vorgabe einer entsprechenden Zielgröße - im Allgemeinen zur Vorgabe eines gewünschte Strahleigenschaften, d. h. insbesondere ein gewünschtes Strahlprofil, aufweisenden Laserstrahls 5 - tätigen kann.

Die Modulationseinrichtung 9 ist der Laserstrahlerzeugungseinrichtung 4 sonach zugeordnet. Die Zuordnung der Modulationseinrichtung 9 zu der Laserstrahlerzeugungseinrichtung 4 ist derart gestaltet, dass der von der Laserstrahlerzeugungseinrichtung 4 ausgehende bzw. erzeugte Laserstrahl 5 auf die Modulationseinrichtung 9 trifft. Die Modulationseinrichtung 9 ist damit ebenso in den Strahlengang des Laserstrahls 5 geschaltet.

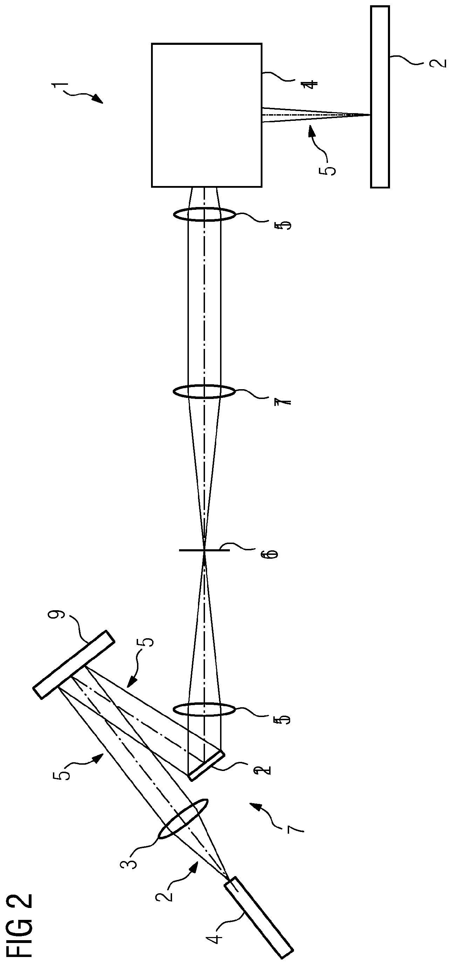

Wie sich aus der eine Prinzipdarstellung der in den Fig. 1, 2 gezeigten Einzelheit III zeigenden Fig. 3 ergibt, umfasst die Modulationseinrichtung 9 mehrere in den Strahlengang des Laserstrahls 5 schaltbare bzw. geschaltete optische Modulationselemente 10, welche zur Beeinflussung eines die Strahleigenschaften beeinflussenden Laserstrahlparameters wenigstens eines Strahlanteils des Laserstrahls 5 eingerichtet sind. Je nach Anzahl und Anordnung jeweiliger Modulationselemente 10 kann es sein, dass auf einzelne, mehrere oder sämtliche Modulationselemente 10 ein bestimmter Strahlanteil des Laserstrahls 5 trifft. Der auf ein jeweiliges Modulationselement 10 treffende Strahlanteil kann vermittels des Modulationselements 10 in seinen Strahleigenschaften, d. h. z. B. Amplitude, Phase und Polarisation, verändert werden, sodass sich insgesamt ein in seinen Strahleigenschaften veränderter Laserstrahl 5 ergibt.

Anhand von Fig. 3 ist ersichtlich, dass die Modulationselemente 10 in einer in den Strahlengang des Laserstrahls 5 geschalteten Gehäusestruktur 11 der Modulationseinrichtung 9 angeordnet bzw. ausgebildet sind, in welcher diese in einer definierten räumlichen Anordnung und/oder Ausrichtung (relativ zueinander) vorliegen. Die Modulationselemente 10 sind dabei, insbesondere pixelartig, in einer Reihe bzw. Spalte - selbstverständlich ist eine Anordnung in mehreren Reihen und/oder Spalten ebenso denkbar - angeordnet bzw. ausgebildet.

Die Modulationselemente 10 können einzeln oder gruppenweise in einen eine Beeinflussung eines die Strahleigenschaften des Laserstrahls 5 beeinflussenden Laserstrahlparameters des Laserstrahls 5 ermöglichenden Zustand (aktiver Zustand) schaltbar sein. Insbesondere kann jedes Modulationselement 10 in einen ersten Zustand, in welchem das jeweilige Modulationselement 10 z. B. eine wenigstens teilweise Transmission oder Reflexion des Laserstrahls 5 bzw. eines Laserstrahlanteils ermöglicht, und in einen zweiten Zustand, in welchem das jeweilige Modulationselement 10 z. B. eine wenigstens teilweise Transmission oder Reflexion des Laserstrahls 5 bzw. eines Laserstrahlanteils nicht ermöglicht, geschaltet werden. Die der Schaltung der Modulationselemente 10 zugrunde liegende Steuerung kann durch eine der Modulationseinrichtung 9 zugehörige Steuereinrichtung (nicht gezeigt) erfolgen. Die Steuereinrichtung kommuniziert (unmittelbar oder mittelbar) mit der bereits erwähnten vorrichtungsseitigen Eingabeeinrichtung, über welche sich entsprechende (benutzerseitig) vorgebbare bzw. vorgegebene Zielgrößen eingeben lassen.

Bei den Modulationselementen 10 handelt es sich konkret um Flüssigkristallelemente. Die Modulationseinrichtung 9 ist sonach als räumlicher Lichtmodulator, engl.: "spatial light modulator", kurz SLM, ausgebildet, welcher vermittels einer geeigneten Anordnung, Ausrichtung und Schaltung entsprechender Flüssigkristallelemente zur separaten oder kumulativen Beeinflussung einzelner oder mehrerer Laserstrahlparameter, d. h. insbesondere der Amplitude, der Phase oder der Polarisation, des Laserstrahls 5 eingerichtet ist. Mithin ist der über die Modulationseinrichtung 9 gezielt veränderbare, die Strahleigenschaften, insbesondere das Strahlprofil, beeinflussende Laserstrahlparameter insbesondere die Amplitude, die Phase oder die Polarisation des Laserstrahls 5 bzw. der Wellenfront des Laserstrahls 5. Die Modulationseinrichtung 9 ist also insbesondere eingerichtet, die Amplitude, die Phase oder die Polarisation des Laserstrahls 5 bzw. der Wellenfront des Laserstrahls 5 gezielt zu verändern.

In dem in Fig. 3 gezeigten Ausführungsbeispiel ist veranschaulicht, dass die Modulationseinrichtung 9 dazu eingerichtet sein kann, vermittels einer gezielten Veränderung der Phase des Laserstrahls 5 (ohne Veränderung der Intensität und der Polarisation des Laserstrahls 5) ausgehend von einem planen Strahlprofil bzw. einer planen Wellenfront des Laserstrahls 5 ein aufgrund einer gezielten Phasenveränderung stufenartiges bzw. -förmiges Strahlprofil bzw. eine stufenartige bzw. -förmige Wellenfront des Laserstrahls 5 zu erzeugen. Dies ist selbstverständlich rein beispielhaft zu verstehen.

Der Modulationseinrichtung 9 (optisch) unmittelbar nachgeschaltet angeordnet ist eine ein Spiegelelement (nicht näher bezeichnet) umfassende Spiegeleinrichtung 12. Die Spiegeleinrichtung 12 dient zur Ablenkung des von der Modulationseinrichtung 9 ausgehenden Laserstrahls 5 auf eine der Spiegeleinrichtung 12 (optisch) unmittelbar nachgeschaltet angeordnete, eine Fourierlinse (nicht näher bezeichnet) umfassende Fourierlinseneinrichtung 13. Die Spiegeleinrichtung 12 und die Fourierlinseneinrichtung 13 sind damit ebenso in den Strahlengang des Laserstrahls 5 geschaltet.

Der Fourierlinseneinrichtung 13 (optisch) unmittelbar nachgeschaltet angeordnet ist eine Strahlablenkeinrichtung 14 (Scannereinrichtung). Die Strahlablenkeinrichtung 14 dient zur gezielten Ablenkung des Laserstrahls 5 auf jeweilige selektiv zu verfestigende Baumaterialschichten. Die Strahlablenkeinrichtung 14 bildet damit den letzten in den Strahlengang des Laserstrahls 5 geschalteten Bestandteil der Belichtungseinrichtung 7 vor Austritt des Laserstrahls 7 aus der Belichtungseinrichtung 7.

Fig. 2 zeigt eine Prinzipdarstellung einer Vorrichtung 1 gemäß einem weiteren Ausführungsbeispiel. Ersichtlich ist auch in Fig. 2 nur der für die Erläuterung des beschriebenen Prinzips relevante Ausschnitt der Vorrichtung 1 gezeigt.

In dem in Fig. 2 gezeigten Ausführungsbeispiel ist der Spiegeleinrichtung 12 eine eine optische Linse (nicht näher bezeichnet) umfassende erste (bzw. weitere) Linseneinrichtung 15 (optisch) unmittelbar nachgeschaltet angeordnet. Der ersten Linseneinrichtung 15 ist eine einen optischen Raumfilter (nicht näher bezeichnet), z. B. in Form eines Pinholes, umfassende Raumfiltereinrichtung 16 (optisch) unmittelbar nachgeschaltet angeordnet. Der Raumfiltereinrichtung 16 ist eine eine weitere optische Linse (nicht näher bezeichnet) umfassende zweite (bzw. weitere) Linseneinrichtung 17 (optisch) unmittelbar nachgeschaltet angeordnet. Der weiteren Linseneinrichtung 17 sind die Fourierlinseneinrichtung 13 und die Strahlablenkeinrichtung 14 nachgeschaltet. Durch die beschriebene Anordnung der vorstehend erwähnten, in der genannten Reihenfolge angeordneten optischen Elemente ist eine 4f-Abbildung realisierbar.

Die Fig. 4 - 7 zeigen je eine Prinzipdarstellung eines Strahlprofils eines Laserstrahls 5. Dabei zeigen die Fig. 4 und 6 jeweils einen Querschnitt (bezogen auf die Ausbereitungsrichtung des Laserstrahls 5) durch einen vermittels der Modulationseinrichtung 9 auf Grundlage einer vorgebbaren bzw. vorgegebenen Zielgröße veränderten Laserstrahl 5. In Fig. 5 ist die Intensitätsverteilung zu dem in Fig. 4 gezeigten Querschnitt des Laserstrahls 5, in Fig. 7 ist die Intensitätsverteilung zu dem in Fig. 6 gezeigten Querschnitt des Laserstrahls 5 dargestellt.

Anhand der Fig. 4, 6 ist ersichtlich, dass sich vermittels der Modulationseinrichtung 9 z. B. querschnittlich (kreis)runde Laserstrahlen 5 mit einer in radialer Richtung veränderlichen Intensität - konkret nimmt die Intensität in radialer Richtung von innen nach außen ab - erzeugen lassen.

Anhand der Fig. 5, 7 ist ersichtlich, dass sich vermittels der Modulationseinrichtung 9 auch eine Aufteilung eines (einzigen) Strahlprofils des Laserstrahls 5 in mehrere diskrete Strahlprofile bzw. Wellenfronten realisieren lässt. Konkret ist der von der Laserstrahlerzeugungseinrichtung 4 ausgehende Laserstrahl 5 hier in zwei punktartige bzw. -förmige Laserstahlen 5 mit einer vergleichsweise spitz zulaufenden Intensitätsverteilung aufgeteilt.

## Patentansprüche

1. Vorrichtung (1) zur additiven Herstellung dreidimensionaler Objekte (2) durch sukzessives schichtweises selektives Belichten und damit einhergehendes Verfestigen von Baumaterialschichten aus einem vermittels eines von einer Laserstrahlerzeugungseinrichtung (4) erzeugten Laserstrahls (5) verfestigbaren Baumaterial (3), umfassend:
- eine Laserstrahlerzeugungseinrichtung (4), welche zur Erzeugung eines Laserstrahls (5) mit durch wenigstens einen Laserstrahlparameter definierten Strahleigenschaften, insbesondere einem durch wenigstens einen Laserstrahlparameter definierten Strahlprofil, eingerichtet ist;
- eine der Laserstrahlerzeugungseinrichtung (4) zugeordnete Modulationseinrichtung (9), welche zur gezielten Veränderung wenigstens eines die Strahleigenschaften, insbesondere das Strahlprofil, beeinflussenden Laserstrahlparameters des von der Laserstrahlerzeugungseinrichtung (4) erzeugten Laserstrahls (5) auf Grundlage einer, insbesondere benutzerseitig, vorgebbaren oder vorgegebenen Zielgröße eingerichtet ist, **dadurch gekennzeichnet, dass** die Modulationseinrichtung (9) der Laserstrahlerzeugungseinrichtung (4) nachgeschaltet ist, wobei sie zwischen einer wenigstens eine Kollimatorlinse umfassenden Kollimatoreinrichtung (8) und einer optischen Spiegeleinrichtung (12) angeordnet oder ausgebildet ist.

2. Vorrichtung nach Anspruch 1, **dadurch gekennzeichnet, dass** die Modulationseinrichtung (9) mehrere, in den Strahlengang des von der Laserstrahlerzeugungseinrichtung (4) erzeugten Laserstrahls (5) schaltbare oder geschaltete optische Modulationselemente (10) umfasst, welche zur Beeinflussung wenigstens eines die Strahleigenschaften beeinflussenden Laserstrahlparameters wenigstens eines Strahlanteils des von der Laserstrahlerzeugungseinrichtung (4) erzeugten Laserstrahls (5) eingerichtet sind.

3. Vorrichtung nach Anspruch 2, **dadurch gekennzeichnet, dass** die optischen Modulationselemente (10), insbesondere pixelartig, in wenigstens einer Reihe und/oder Spalte angeordnet oder ausgebildet sind.

4. Vorrichtung nach Anspruch 2 oder 3, **dadurch gekennzeichnet, dass** die optischen Modulationselemente (10) einzeln oder gruppenweise in einen eine Beeinflussung des wenigstens einen die Strahleigenschaften beeinflussenden Laserstrahlparameters des Laserstrahls (5) ermöglichenden Zustand schaltbar sind.

5. Vorrichtung nach einem der Ansprüche 2 bis 4, **dadurch gekennzeichnet, dass** ein optisches Modulationselement (10) als ein Flüssigkristallelement ausgebildet ist oder wenigstens ein solches umfasst.

6. Vorrichtung nach einem der vorhergehenden Ansprüche, **dadurch gekennzeichnet, dass** die Modulationseinrichtung (9) als ein räumlicher Lichtmodulator ausgebildet ist oder einen solchen umfasst.

7. Vorrichtung nach einem der vorhergehenden Ansprüche, **dadurch gekennzeichnet, dass** die Modulationseinrichtung (9) der Laserstrahlerzeugungseinrichtung (4) optisch nachgeschaltet ist, wobei der Modulationseinrichtung (9) eine optische Spiegeleinrichtung (12), eine, insbesondere eine optische Linse umfassende, erste Linseneinrichtung (15), eine, insbesondere einen optischen Raumfilter umfassende, Raumfiltereinrichtung (16) eine, insbesondere eine weitere optische Linse umfassende, weitere Linseneinrichtung (17) und eine, insbesondere eine Fourierlinse umfassende, Fourierlinseneinrichtung (13) nachgeschaltet ist.

8. Vorrichtung nach einem der vorhergehenden Ansprüche, **dadurch gekennzeichnet, dass** der Modulationseinrichtung (9) eine Strahlablenkeinrichtung (14), welche zur Ablenkung des Laserstrahls (5) auf eine selektiv zu belichtende Baumaterialschicht eingerichtet ist, nachgeschaltet ist.

9. Vorrichtung nach einem der vorhergehenden Ansprüche, **dadurch gekennzeichnet, dass** der über die Modulationseinrichtung (9) gezielt veränderbare, die Strahleigenschaften, insbesondere das Strahlprofil, beeinflussende Laserstrahlparameter
die Amplitude des Laserstrahls (5), insbesondere der Wellenfront des Laserstrahls (5), ist, wobei die Modulationseinrichtung (9) eingerichtet ist, die Amplitude des Laserstrahls (5) zu verändern, und/oder die
die Phase des Laserstrahls (5), insbesondere der Wellenfront des Laserstrahls (5), ist, wobei die Modulationseinrichtung (9) eingerichtet ist, die Phase des Laserstrahls (5) zu verändern, und/oder
die Polarisation des Laserstrahls (5), insbesondere der Wellenfront des Laserstrahls (5), ist, wobei die Modulationseinrichtung (9) eingerichtet ist, die Polarisation des Laserstrahls (5) zu verändern.

## Claims

1. Apparatus (1) for the additive manufacturing of three-dimensional objects (2) by successive, selective layer-by-layer exposure and related compacting of building material layers, consisting of building material (3) solidifiable by means of a laser beam (5), which is generated by a laser beam generating unit (4), comprising:
- a laser beam generating unit (4), which is provided to generate a laser beam (5) with beam characteristics defined by at least one laser beam parameter, in particular a beam profile that is defined by at least one laser beam parameter;
- a modulation device (9) attributed to the laser beam generating unit (4), which is provided for the targeted modification of at least one laser beam parameter influencing the laser beam characteristics, in particular the beam profile, of the laser beam (5) that is generated by the laser beam generating unit (4), based on a target value being in particular configurable or set by the user, **characterized in that** the modulation device (9) of the laser beam generating unit (4) is connected downstream, wherein it is arranged or embodied in between the collimator device (8) which comprises at least one collimator lens and an optical mirror device (12).

2. Apparatus according to claim 1, **characterized in that** the modulation device (9) comprises several optical modulation elements (10) that can be or are switched in the beam path of the laser beam (5) generated by the laser beam generating unit (4), which are provided to influence at least one of laser beam parameters influencing the beam characteristics of at least one beam part of the laser beam (5) generated by the laser beam generating unit (4).

3. Apparatus according to claim 2, **characterized in that** the optical modulation elements (10) are arranged on or embodied in particular as pixels in at least one row and/or column.

4. Apparatus according to claims 2 or 3, **characterized in that** the optical modulation elements (10) are switchable individually or in groups into a state that enables the influencing of the at least one laser beam parameter of the laser beam (5), which is influencing the beam characteristics.

5. Apparatus according to claims 2 to 4, **characterized in that** an optical modulation element (10) is embodied as a liquid crystal element or at least comprises such.

6. Apparatus according to one of the foregoing claims, **characterized in that** the modulation device (9) is embodied as or comprises a spatial light modulator.

7. Apparatus according to one of the foregoing claims, **characterized in that** the modulation device (9) of the laser beam generating unit (4) is connected optically downstream, wherein an optical mirror device (12), a first lens unit (15) comprising in particular an optical lens, a room filter unit (16) comprising in particular an optical room filter, a further lens unit (17) comprising in particular a further optical lens, and a Fourier lens unit (13) comprising in particular one Fourier lens are connected downstream from the modulation device (9).

8. According to one of the foregoing claims **characterized in that** a beam deflection device (14), which is configured for the deflection of the laser beam (5) onto a building material layer to be exposed selectively, is connected downstream from the modulation device (9).

9. Apparatus according to one of the foregoing claims, **characterized in that,** the laser beam parameter, which is modifiable specifically by means of the modulation device (9) and which influences the beam characteristics, in particular the beam profile, is the amplitude of the laser beam (5), in particular the wave front of the laser beam (5), wherein the modulation device (9) is provided to modify the amplitude of the laser beam (5) and/or the phase of the laser beam (5), in particular the wave front of the laser beam (5), wherein the modulation device (9) is provided to modify the phase of the laser beam (5) and/or the polarization of the laser beam (5), in particular the wave front of the laser beam (5), wherein the modulation device (9) is provided to modify the polarization of the laser beam (5).

## Revendications

1. Dispositif (1) de fabrication additive d'objets tridimensionnels (2) par irradiation successive sélective couche par couche et ainsi solidification concomitante de couches de matériau de construction à partir d'un matériau de contruction solidifiable (3) au moyen d'un rayon laser (5) créé par un dispositif de création de rayon laser (4), comprenant :
- un dispositif de création de rayon laser (4) conçu pour créer un rayon laser (5) avec des propriétés de rayon définies par au moins un paramètre de rayon laser, en particulier avec un profil de rayon défini par au moins un paramètre de rayon laser ;
- un dispositif de modulation (9) affecté au dispositif de création de rayon laser (4), conçu pour modifier de façon ciblée au moins un des paramètres de rayon laser influençant les propriétés de rayon, en particulier le profil de rayon, du rayon laser (5) créé par le dispositif de création de rayon laser (4) sur la base d'une valeur cible prédéfinie ou prédéfinissable, en particulier de la part de l'utilisateur, **caractérisé en ce que** le dispositif de modulation (9) du dispositif de création de rayon laser (4) est monté en aval, disposé ou constitué entre un collimateur (8), le collimateur (8) comprenant au moins une lentille collimatrice, et un miroir optique (12).

2. Dispositif selon la revendication 1, **caractérisé en ce que** le dispositif de modulation (9) comprend plusieurs éléments de modulation optique (10) branchés ou branchables sur le chemin optique du rayon laser (5) créé par le dispositif de création de rayon laser (4), conçus pour influencer au moins un des paramètres de rayon laser influençant les propriétés de rayon d'au moins une partie du rayon laser (5) créé par le dispositif de création de rayon laser (4).

3. Dispositif selon la revendication 2, **caractérisé en ce que** les éléments de modulation optique (10) sont disposés ou conçus en au moins une ligne et/ou une colonne, en particulier sous forme de pixels.

4. Dispositif selon la revendication 2 ou 3, **caractérisé en ce que** les éléments de modulation optique (10) sont commutables seuls ou en groupe dans un état permettant d'influencer l'au moins un paramètre de rayon laser du rayon laser (5) influençant les propriétés de rayon.

5. Dispositif selon l'une quelconque des revendications 2 à 4, **caractérisé en ce qu'**un élément de modulation optique (10) est conçu comme un élément cristal liquide ou comprend au moins un tel élément.

6. Dispositif selon l'une quelconque des revendications précédentes, **caractérisé en ce que** le dispositif de modulation (9) est conçu comme un modulateur spatial de lumière ou comprend un tel élément.

7. Dispositif selon l'une quelconque des revendications précédentes, **caractérisé en ce que** le dispositif de modulation (9) du dispositif de création de rayon laser (4) est monté optiquement en aval, le dispositif de modulation (9) étant branché en aval d'un miroir optique (12), un premier dispositif lentille (15), en particulier comprenant une lentille optique, un dispositif de filtrage spatial (16), en particulier comprenant un filtre spatial, un autre dispositif lentille (17), en particulier comprenant une lentille optique, et un dispositif à lentille de Fourier (13), en particulier comprend une lentille de Fourier.

8. Dispositif selon l'une quelconque des revendications précédentes, **caractérisé en ce qu'**en aval du dispositif de modulation (9) est branché un déflecteur de rayon (14) conçu pour défléchir le rayon laser (5) sur un matériau de construction à irradier sélectivement.

9. Dispositif selon l'une quelconque des revendications précédentes, **caractérisé en ce que** le paramètre de rayon laser influençant les propriétés de rayon, en particulier le profil de rayon, modifiable de façon ciblée via le dispositif de modulation (9) est l'amplitude du rayon laser (5), en particulier du front d'onde du rayon laser (5), le dispositif de modulation (9) étant conçu pour modifier l'amplitude du rayon laser (5), et/ou la phase du rayon laser (5), en particulier du front d'onde du rayon laser (5), le dispositif de modulation (9) étant conçu pour modifier la phase du rayon laser (5), et/ou la polarisation du rayon laser (5), en particulier du front d'onde du rayon laser (5), le dispositif de modulation (9) étant conçu pour modifier la polarisation du rayon laser (5).
